# EUROPÄISCHE PATENTANMELDUNG

(11) **EP 0 781 740 A2**
(43) Veröffentlichungstag der Anmeldung: **02.07.1997**
(21) Anmeldenummer: 96119439.6
(22) Anmeldetag: 04.12.1996
(51) Int. Cl.: C04B 41/91

(54) **Verfahren zur Bearbeitung von elektrisch nicht-leitenden Hartstoffen**

(30) Priorität: 05.12.1995 DE 19545198
(71) Anmelder: Jakob Lach GmbH & Co. KG, 63408 Hanau (DE)
(72) Erfinder: Lach, Horst, 63450 Hanau (DE)
(74) Vertreter: Jochem, Bernd, Dipl.-Wirtsch.-Ing.

(57) **Zusammenfassung**

Das Verfahren zur Bearbeitung von elektrisch nicht-leitenden Hartstoffen, insbesondere Körpern oder Schichten aus künstlichem einkristallinem Diamant oder Siliziumkarbid, ist in erster Linie für die Herstellung von Schneidwerkzeugen bestimmt. Da sich die genannten Hartstoff normalerweise nur schleifend bearbeiten lassen, sieht die Erfindung zur Verbesserung der Bearbeitungsmöglichkeiten vor, daß die Hartstoffe entweder durch Dotierung elektrisch leitfähig gemacht werden oder eine elektrisch leitfähige Schicht auf die Oberfläche aufgetragen, z. B. aufgesputtert, wird. Nach diesen vorausgehenden Maßnahmen findet dann eine funkenerosive Bearbeitung statt.

## Beschreibung

Die Erfindung befaßt sich mit der Bearbeitung von elektrisch nicht-leitenden Hartstoffen, insbesondere künstlichen einkristallinen Diamanten, z. B. im CVD-Verfahren hergestellten Diamantschichten und Teilen aus Siliziumkarbid. Solche Hartstoffe finden insbesondere als Material für Werkzeuge zur Bearbeitung von Metall, Holz und Kunststoff Anwendung. Im Gegensatz zu polykristallinem Diamant enthalten sie keine elektrisch leitfähigen Bestandteile. Daher scheidet eine Bearbeitung im Funkenerosionsverfahren grundsätzlich aus. Das Material läßt sich nur mit Laserstrahlen und durch Schleifen bearbeiten. Die genaue Formgebung, insbesondere von Werkzeugschneiden, ist daher sehr material- und zeitaufwendig und dementsprechend teuer.

Der Erfindung liegt die Aufgabe zugrunde, ein Verfahren bereitzustellen, mit dem man derartige elektrisch nich-leitende Hartstoffe einfacher und schneller bearbeiten kann, und zur Lösung dieser Aufgabe wird erfindungsgemäß vorgeschlagen, daß die Hartstoffe bei der Herstellung durch Dotierung elektrisch leitfähig gemacht werden oder nach ihrer Herstellung auf wenigstens einer Seite eine elektrisch leitende Schicht aufgetragen und dann eine funkenerosive Bearbeitung ausgeführt wird.

Mittels der vorgeschlagenen Dotierung oder der elektrisch leitfähigen Schicht kann zwischen dem aus Hartstoff bestehenden Werkstück und einer zu dessen Bearbeitung benutzten Elektrode eine elektrische Spannung angelegt und eine funkenerosive Bearbeitung durchgeführt werden. Im Falle einer aufgetragene, elektrisch leitfähigen Schicht treffen die Funken zwar diese, entfalten aber ihre erosive Wirkung auch auf den Hartstoff, so daß dieser ebenfalls abgetragen wird. Der Abtrag läßt sich sehr genau steuern und ist weit weniger aufwendig als das Abtragen durch Schleifen.

Die auf den Hartstoff aufgetragene elektrisch leitende Schicht ist vorzugsweise eine Metallschicht, die z. B. Silber enthält. Sie kann in Form einer Paste aufgetragen werden. Einen sehr gleichmäßigen Auftrag erhält man, wenn die elektrisch leitende Schicht aufgesputtert, d. h. im Wege der Kathodenzerstäubung aufgetragen wird. Wenn, je nach Dicke des Hartstoffteils oder der Hartstoffschicht, ein Auftrag einer elektrisch leitenden Schicht für die vorgesehene Bearbeitung nicht ausreicht, kann der Hartstoff auf beiden Seiten mit einer elektrisch leitenden Schicht versehen werden. Außerdem besteht die Möglichkeit, die elektrisch leitende Schicht zu erneuern, nachdem sie während der Bearbeitung mittels draht- oder scheibenförmiger Werkzeugelektrode an der Bearbeitungsstelle abgetragen worden ist. Die elektroerosive Bearbeitung kann mit einer Schleifbearbeitung und/oder einer eventuell auch nur lokalen zusätzlichen Erwärmung, z. B. durch Laser, kombiniert sein.

Um für die Herstellung von Werkzeugen Rohlinge aus Siliziumkarbid oder künstliche einkristalline Diamanten zu erhalten, die elektrisch leitfähig sind und sich elektroerosiv bearbeiten lassen, wird erfindungsgemäß von der Dotierungstechnik Gebrauch gemacht, die für die Herstellung von Halbleitern entwickelt worden ist. Vorzugsweise werden die genannten, sonst nicht elektrisch leitfähigen Hartstoffe mit fünfwertigen Elementen, z. B. Phosphor, Antimon, Arsen oder Stickstoff, dotiert. Alternativ oder zusätzlich kommt auch eine Dotierung mit dreiwertigen Elementen, wie z. B. Bor, Gallium, Indium oder Aluminium in Frage. Schließlich ist auch eine Dotierung mit zweiwertigen oder sechswertigen Elementen, wie z. B. Selen, Tellur, Sauerstoff oder Schwefel möglich.

## Patentansprüche

1. Verfahren zur Bearbeitung von elektrisch nicht-leitenden Hartstoffen, **dadurch gekennzeichnet**, daß die Hartstoffe bei der Herstellung durch Dotierung elektrisch leitfähig gemacht werden oder nach ihrer Herstellung auf wenigstens einer Seite eine elektrisch leitende Schicht aufgetragen und dann eine funkenerosive Bearbeitung ausgeführt wird.

2. Verfahren nach Anspruch 1, **dadurch gekennzeichnet**, daß der Hartstoff eine Diamantschicht ist.

3. Verfahren nach Anspruch 2, **dadurch gekennzeichnet**, daß die Diamantschicht im CVD-Verfahren gewonnen ist.

4. Verfahren nach Anspruch 1, **dadurch gekennzeichnet**, daß der Hartstoff ein künstlicher einkristalliner Diamant ist.

5. Verfahren nach Anspruch 1, **dadurch gekennzeichnet**, daß der Hartstoff Siliziumkarbid ist.

6. Verfahren nach einem der Ansprüche 1 bis 5, **dadurch gekennzeichnet**, daß als elektrisch leitende Schicht eine Metallschicht aufgetragen wird.

7. Verfahren nach Anspruch 6, **dadurch gekennzeichnet**, daß die Metallschicht als Paste aufgetragen wird.

8. Verfahren nach Anspruch 6, **dadurch gekennzeichnet**, daß die Metallschicht durch Kathodenzerstäubung aufgetragen wird.

9. Verfahren nach einem der Ansprüche 6 bis 8, **dadurch gekennzeichnet**, daß die Metallschicht Silber enthält.

10. Verfahren nach einem der Ansprüche 1 bis 5, **dadurch gekennzeichnet**, daß der Hartstoff mit einem fünfwertigen und/oder dreiwertigen Element dotiert wird.

11. Verfahren nach einem der Ansprüche 1 bis 10, **dadurch gekennzeichnet**, daß der Hartstoff mit einer draht- oder scheibenförmigen Elektrode funkenerosiv bearbeitet wird.

12. Verfahren nach Anspruch 11, **dadurch gekennzeichnet**, daß der Hartstoff mittels einer Elektrode, die gleichzeitig ein Schleifwerkzeug ist, während der funkenerosiven Bearbeitung geschliffen wird.

13. Verfahren nach Anspruch 11 oder 12, **dadurch gekennzeichnet**, daß der Hartstoff während der funkenerosiven Bearbeitung zusätzlich lokal oder insgesamt erwärmt wird.
